# EUROPEAN PATENT APPLICATION

(11) **EP 4 737 720 A1**
(43) Date of publication of application: **06.05.2026**
(21) Application number: 25210481.5
(22) Date of filing: 22.10.2025
(51) Int. Cl.: F03D 80/70, F16C 33/66, F16N 11/00

(54) **LUBRICATION UNIT AND LUBRICATION SYSTEM**

(30) Priority: 25.10.2024 DK PA202430645
(71) Applicant: Danhydra A/S, 7400 Herning (DK)
(72) Inventor: HOVE, Thomas, 7400 Herning (DK)
(74) Representative: Larsen & Birkeholm A/S

(57) **Abstract**

The present invention relates to a lubrication unit for a large bearing. Such large bearings may be used in wind turbines, and normally each bearing may be equipped with two, three, four or more lubrication units. In particular, the present invention relates to a decentralized lubrication unit for a large bearing.

A lubrication unit (1) for a bearing (2) according to the invention comprises a container (6) comprising a reservoir for lubricant and comprising an inlet (12) and an outlet (12) for lubricant, an inlet (11) through which lubricant is supplied to the lubrication unit (1) and an outlet (10) through which lubricant is supplied to the bearing (2), means (13) for fluidly connecting the lubrication unit (1) to the bearing (2), wherein the lubrication unit (1) is secured to a surface of the bearing (2) during operation.

## Description

The present invention relates to a lubrication unit for a large bearing. Such large bearings may be used in wind turbines, and normally each bearing may be equipped with two, three, four or more lubrication units.

In particular, the present invention relates to a decentralized lubrication unit for a large bearing.

### Background of the invention

Normally, large wind turbines have rotor blades that can be pitched about their longitudinal axes, and the circular root end of a rotor blade terminates at a pitch bearing. A pitch system actuates one or more drive motors in response to a command from the wind turbine controller to pitch the rotor blade by a determined angular amount, and a reliable lubrication of the pitch bearing is very important. Damage to a pitch bearing can result in wind turbine downtime resulting in a lower annual energy production. The reliability of the pitch bearings is particularly relevant in the case of an offshore wind turbine because service routines are expensive and hazardous.

A rotor blade of a large wind turbine can have a length in the region of 90 m, a mass in the region of 50000 kg and a root end diameter in the order of 5 m. The pitch bearing of such a large rotor blade may be realised as a roller bearing, a ball bearing, a slider bearing, etc. The stationary part and the rotating part of the bearing are always separated by a film of oil or grease. Since lubricant deteriorates over time, a pitch bearing is generally equipped with a lubricant system which is able to replenish the lubricant as required.

Various lubrication systems are available, and most systems include a grease reservoir and one or more feeder lines to grease inlets of the bearing. Controlled quantities of grease are fed at intervals into the bearing. In a single-line lubrication system, a pump station delivers lubricant through a single supply line to a lubricant metering device serving a single lubrication point. A pitch bearing of a large rotor blade can have several such lubrication points. In a progressive lubrication system, lubricant is continually transported to various lubrication points as long as the lubricant pump is running. When the pump is halted, the pistons of a metering device will also stop, and will "hold" their positions. When the pump starts supplying lubricant again, the metering device pistons resume from those positions.

Also, grease deteriorates over time, and the used grease must be removed and collected in a controlled manner and replaced by new grease.

Normally, grease is fed to the large bearing of a wind turbine by a centralized lubrication system. According to a centralized lubrication system grease is provided from one, two or three grease reservoirs and pumped into one or more bearings. Due to the relatively long tubes guiding grease from the centralized reservoir(s), the grease has to be pumped by a relatively high pressure.

CN 22168424 U published 10 September 2024 shows a lubrication unit for a printing press bearing which lubrication unit is attached directly to the bearing. The lubrication device is provided with automatic oil level detection and comprises an oil storage tank, a bearing body arranged below the oil storage tank, wherein the oil storage tank is fixedly mounted on the bearing body through a plurality of support rods. A display (10) is fixedly mounted on top of the oil storage tank, an oil filling hole (4) and an oil outlet groove (5) are respectively provided at the top and at the right side of the bearing body, a connecting box (6) is fixedly connected to the oil outlet groove (5), a detection box is fixedly mounted on the connecting box. A liquid level sensor (15) being electrically connected to the display is arranged inside the detection box. The oil adding mechanism includes a pressure plate (901), a threaded rod (902) and a smooth rod (903), the pressure plate is slidably arranged inside the oil storage tank, a threaded rod is rotatably installed and a smooth rod is fixedly installed on the left and right sides of the oil storage tank respectively, the thread of the threaded rod passes through the pressure plate, and the smooth rod movably passes through the pressure plate. The pressure plate can move up and down on the inner side of the oil storage tank during the rotation of the threaded rod. When moving downward, it pushes the lubricating oil deposited on the lower side and supplies lubricating oil into the bearing body through the oil filling pipe and the oil filling hole. When moving upward, the internal space is vacated to facilitate the addition and storage of new lubricating oil through the refuelling groove (23) at the top of the oil storage tank. This system is difficult to control especially when delivering batchwise doses to a bearing.

Hence, an improved lubrication system where the grease need not be pumped by a high pressure would be advantageous, and in particular a system comprising highly reliable lubrication units comprising automatic supply of lubrication would be advantageous.

### Summary of the invention

Thus, an object of the present invention relates to an improved lubrication system being more reliable and easier to control.

Thus, one aspect of the invention relates to a lubrication unit (1) for a bearing (2) comprising a container (6) comprising a reservoir for lubricant and comprising an inlet (12) and an outlet (12) for lubricant, further comprising an inlet (11) through which lubricant is supplied to the lubrication unit (1) and an outlet (10) through which lubricant is supplied to the bearing (2), and comprising means (13) for fluidly connecting the lubrication unit (1) to the bearing (2), wherein the lubrication unit (1) is secured to a surface of the bearing (2) during operation.

According to any embodiment of the first aspect, the means (13) for connecting the lubrication unit (1) to the bearing may comprise a rigid connection such as a pipe fluidly connected to the reservoir and the inside of the bearing (2). According to such an embodiment, the rigid connection may be fixed to the bearing (2) by one end of a pipe being inserted into an opening in the surface of the bearing, optionally the one end of the pipe comprises an outer thread and the opening (9) in the bearing (2) comprises a corresponding inner thread.

Also, one aspect of the invention relates to a lubrication unit (1) for a bearing (2) comprising a container (6) comprising a reservoir for lubricant and comprising an inlet (12) and an outlet (12) for lubricant, a hose or tube or pipe (13) configured to fluidly connect the lubrication unit (1) to the bearing (2), wherein the lubrication unit (1) comprises a distribution chamber (14) which distribution chamber (14) comprises an inlet (11) for lubricant from an external source, an outlet (12) for lubricant to the container (6), an inlet (12) for lubricant from the container (6), and an outlet (10) for lubricant to the bearing (2).

According to any embodiment of this aspect, the lubrication unit (1) may be secured to a surface of the bearing (2) during operation.

According to any embodiment of this aspect, the lubrication unit (1) may be fluidly connected to the bearing by a rigid connection.

According to any embodiment of this aspect, an end of the pipe (13) configured to be fixed to the bearing (2) may comprise an outer thread adapted to fit a corresponding inner thread of an opening (9) in a bearing (2).

According to any embodiment of this aspect, the distance between the container (6) of the lubrication unit (1) and surface of the bearing (2) to which it is mounted may be less than 1 m, or less than 0,5 m, or less than 0,4 m or less than 0,2 m.

According to any embodiment of this aspect, the lubrication unit (1) may comprise controlling means (8, 17) controlling the amount of lubricant supplied to the bearing (2). The controlling means may comprise a pump (8) and a valve (16). The opening and closing of the valve (16) may be controlled by air supplied via an air supply line (15).

According to a second aspect, the invention relates to a lubrication system comprising a lubrication unit (1) according to the first or the above aspect, which lubricating system further comprises a bearing (2).

According to any embodiment of the second aspect, the lubrication system may comprise at least two lubrication units (1), or at least three lubrication units (1), or at least four lubrication units (1), or at least five lubrication units (1), or at least six lubrication units (1).

According to any embodiment of the second aspect, the bearing (2) may be a roller bearing, a ball bearing, a slider bearing or the like.

According to any embodiment of the second aspect, the bearing (2) may be a large bearing having an inner diameter of at least 1 m, or of at least 2 m, and/or of maximum 10 m.

According to any embodiment of the second aspect, the bearing may be applied as a pitch bearing in a wind turbine.

According to any embodiment of the second aspect, each opening (9) in the bearing (2) may comprise fastening means adapted to fix a pipe (13) of the lubrication unit (1) to the bearing (2) such as a corresponding thread or a snap-fit joint.

### Brief description of the figures

Figure 1 shows a side-view of an embodiment of a bearing according to the invention comprising a plurality of decentralized lubrication units.
Figure 2 shows an inclined side-view of the same embodiment as fig. 1.
Figure 3 shows a side-view of an embodiment of a lubrication unit according to the invention.
Figure 4 shows a view from a second side of same embodiment as fig. 3.

The present invention will now be described in more detail in the following.

### Detailed description of the invention

### Definitions

Prior to discussing the present invention in further details, the following terms and conventions will first be defined:
*In general -* when this expression is used when mentioning a feature relating to the present invention, it must be understood that the feature may be used with all embodiments of the invention, even if the mentioning is made in the detailed part of the document.

*Fluidly connected* - that units or parts are fluidly connected means that fluid can be transported between the units or parts via a pipe or a tube or like connection and that the pipes or tubes or the like connections is/are fastened in a fluid-tight manner to each unit or part.

The invention will now be described in further details in the following.

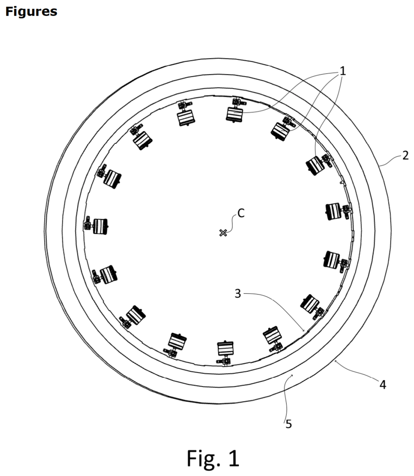

Figure 1 shows a side-view of a lubrication system according to the invention which lubrication system comprises a bearing 2 in combination with a plurality of lubrication units 1 mounted on a surface of the bearing 2 and fluidly connected to the inside of the bearing 2. In the shown embodiment the lubrication system comprises 15 lubrication units 1 mounted on an inner surface 3 of the bearing 2, however, the number of lubrication units 1 may be varied primarily corresponding to the size of the bearing 2.

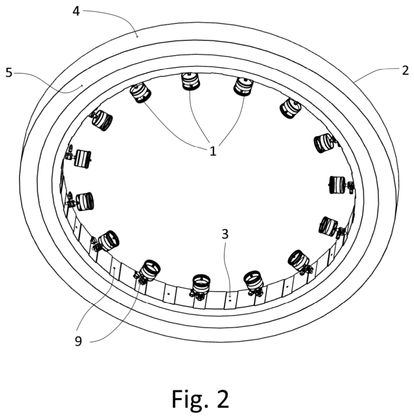

Figure 2 shows the same embodiment as fig. 1 in an inclined side-view.

An inner surface 3 of a bearing 2 is defined as a surface facing the rotational axis C of the bearing 2, an outer surface 4 is defined as a surface facing away from the rotational axis C, and a side surface 5 is one of normally two side surfaces connecting the inner surface 3 and the outer surface 4 and each side surface normally faces in a direction at least partly parallel to the rotational axis C. Optionally, either the inner surface 3 combined with an inner part rotates, or the outer surface 4 combined with an outer part rotates, whereas the opposite part or surface is stationary.

Fig. 2 shows the inner surface 3 of the bearing, the outer surface 4 of the bearing and one side surface 5 of the bearing, fig. 1 only shows one side surface 5 of the bearing.

The 15 lubrication units 1 mounted along the inner surface 3 of the bearing 2, are mounted at an equal distance, and in general, the lubrication unit 1 may be mounted at an equal distance. However, the lubrication units 1 may be mounted according to any other pattern providing a properly distributed lubrication inside the bearing 2. Normally, the inner surface 3 of the bearing 2 comprises a series of openings 9 allowing lubricant to be supplied to the inside of the bearing 2 during operation. The openings 9 are provided during manufacturing of the bearing 2 as a large bearing 2 must have lubricant supplied to the inner moving parts during operation as it is unavoidable that lubricant inside the bearing 2 degrades or disappears.

In general, the number of lubrication units 1 may depend on the size of the bearing defined by either the inner or outer diameter of the bearing 2, or of the kind of bearing i.e. whether the bearing is a roller bearing, a ball bearing, a slider bearing etc., or other features which define how much lubricant is needed inside the bearing 2 and therefore also define how much lubricant is to be replaced inside the bearing 2 during operation.

A large bearing in the context of the present invention normally has an inner diameter of at least 1 m, normally at least 2 m or from 3 to 10 m.

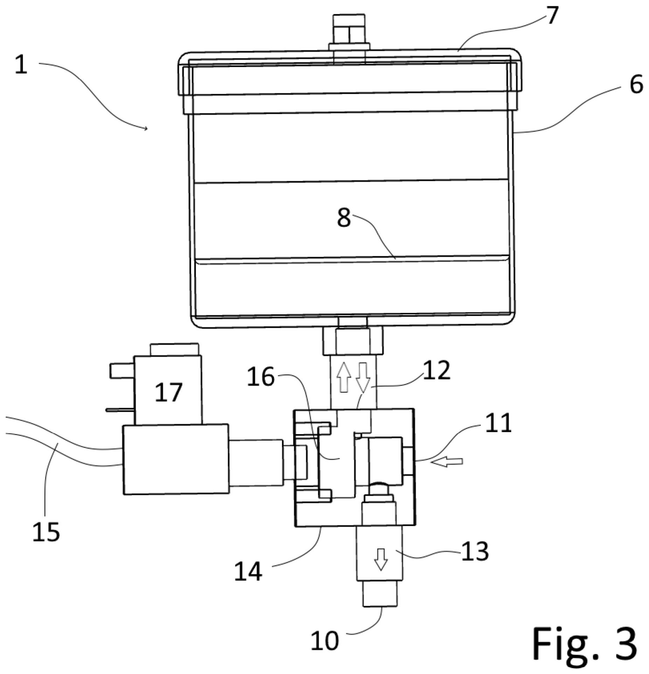

Figure 3 shows an inclined side-view of a lubrication unit 1 according to the invention.

The lubrication unit 1 comprises a container 6 providing a reservoir for a lubricant. The container 6 may comprise a cover 7 and/or a piston 8 and either the cover 7 or the piston 8 defines an outer or upper surface or boundary of the lubricant reservoir. The lubricant is normally grease or a similar viscous or highly viscous lubricant used for bearings, in particular for large bearings such as a pitch bearing for a wind turbine.

In general, the grease provided to the bearing have an NLGI consistency numbers of 0 - 6, normally of 1 - 5.

In general, the lubrication unit 1 comprises an inlet 11 for filling lubricant into the container 6 from a not shown external source and an outlet 10 for supplying lubricant to the inside of a bearing 2 via an opening 9 in the surface of the bearing 2. According to the shown embodiment, the inlet 11 for filling lubricant into the container 6 is not identical to the outlet 10 supplying lubricant to the bearing 2. Separating the inlet 11 from the outlet 10 has the effect that lubricant may be filled into the container 6 of the lubrication unit 1 while the outlet 10 of the lubrication unit 1 is continuously mounted to an opening 9 of the bearing 2.

The outlet 10 of the lubrication unit 1 is fluidly connected to at least one opening 9 for lubricant in the bearing 2 via a hose or pipe 13. Also, the outlet 10 and therefore the opening 9 is fluidly connected to the reservoir of the container 6, at least during periods of operation where lubricant is supplied to the bearing 2.

A lubrication unit 1 according to the invention comprises means for securing the lubrication unit 1 to the bearing 2. Such means for securing the lubrication unit 1 to the bearing 2 may comprise corresponding threads such as an outer thread on a rigid pipe comprising the outlet 10 which outer thread then may correspond to an inner thread of the opening 9. However, a skilled person may construct other means for securing the lubrication unit 1 to the bearing 2, e.g. means which are not as such part of the lubrication unit 1 but means holding on to both the lubrication unit 1 and to the bearing 2.

in general, a lubrication unit 1 according to the invention comprises a distribution chamber 14 which distribution chamber 14 comprises an inlet 11 for lubricant from an external source, an outlet 12 for lubricant from the distribution chamber 14 to the reservoir of the container 6, an inlet for lubricant from the reservoir of the container 6 which inlet may be identical to the outlet 12, and an outlet 10 for lubricant to the bearing 2. According to the embodiment of fig. 3, the inlet and outlet 12 for lubricant to the reservoir of the container 6 is constituted of a single opening, however, the inlet and the outlet 12 may be constructed as two separate openings e.g. if filling and emptying of the reservoir is taking place simultaneously. Alternatively, the distribution chamber 14 need not have an inlet 11 for receiving lubricant from an external source, the lubricant from the external source may be supplied directly to the container 6 e.g. through an opening in a part of a wall close to the outlet from the reservoir of the container 6, or through an opening of the piston 8.

A lubrication unit 1 according to the invention normally comprises means for controlling a supply of lubricant to the bearing 2. When providing the lubrication unit 1 with a distribution chamber filling and emptying of grease into and out of the container 6 is easily controlled.

When a lubrication unit comprises a distribution chamber as defined above, the lubrication storage tank need not comprise such functional elements as corresponding functional elements instead may be connected or be part of the distribution chamber 14. According to the embodiment shown in fig. 1-3 of the present invention, the lubrication storage tank, named the container 6, comprises a cover 7 and/or a piston 8 and either the cover 7 or the piston 8 defines an outer or upper surface or boundary of the lubricant reservoir, other functional elements such as the pumping unit are part of the distribution chamber 14.

This makes it possible to provide a lubrication unit with a small container 6 and also the container may be adapted in shape to fit into a small or narrow space such as a central opening of a bearing.

Lubricant may be supplied continuously and if supplied continuously, the flow of lubricant into the bearing 2 may be defined of the pressure difference between the reservoir or at the inlet of the connecting means 13 which may comprise a tube or a pipe or the like, and the outlet 10 of the connecting mean 13 or at the inlet to the bearing 2. This pressure difference may be controlled by a piston 8 configured to increase the pressure inside the reservoir and continuously provide a higher pressure inside the reservoir and at the inlet of the connecting means 13 than inside the bearing 2. The difference between the pressure of the reservoir/inlet of connecting means 13 and the pressure inside the bearing 2 then defines the supply of lubricant to the bearing 2.

Alternatively, lubricant may be supplied batch-wise to the bearing 2.

A batch-wise supply of lubricant may comprise a valve 16 which controls a flow through out of the outlet 10 and through an opening 9 into the bearing 2 at certain times or periods. Alternatively, a batch-wise supply of lubricant may comprise means controlling the pressure inside the reservoir of the container 6 or inside a distribution chamber 14 of lubrication unit 1 which pressure may be increased at certain times or periods.

The valve 16 may be controlled by air pressure supplied through an air supply line 15. When the valve 16 is activated, a portion or dose of lubricant is pushed through the outlet 10 of the lubrication unit 1 into the bearing 2.

The controlling means may be dimensioned to supply lubricant in batches of 1-10 gram per batch, i.e. the periods defined to supply lubricant may be rather short and may occur with short intervals, e.g. every hour, or every fourth hour or similar.

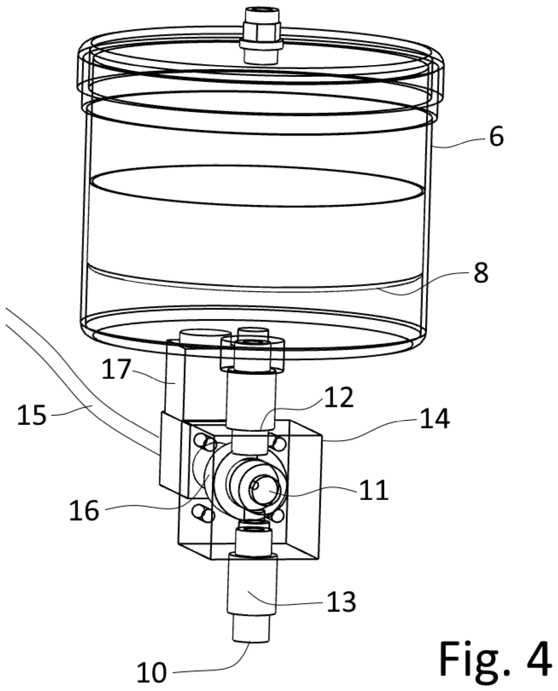

In the embodiment of a lubrication unit 1 shown in fig. 3-5, the means for controlling supply of lubricant to the bearing 2 comprises an air supply line 15 and a valve 16 controlled by air pressure. When actuated the valve 16 opens for flow from the reservoir to the outlet 10 of the connecting means 13, normally the valve 16 is opened for a short time allowing 1-3 grams of lubricant to enter through the opening 9 into the bearing 2.

The invention also relates to a lubrication system or an assembly comprising at least two, or three, or four, or five, or six or more lubrication units 1 according to the invention and also comprising a bearing 2. Normally, the bearing of such a lubrication system is adapted or configured to mount the one, two, three or more lubrication units 1 at a position close to an opening 9 in the surface of the bearing 2. According to a preferred embodiment means 13 for connecting the lubrication unit to the bearing may also constituted or be part of the means for securing the lubrication unit 1 at the correct position.

The one, two or more lubrication units 1 are normally mounted along a perimeter of the bearing 2 i.e. either along the inner perimeter or along the outer perimeter of the bearing 2, and a constant or controlled fluid connection is provided between each lubrication unit 1 and the bearing 2.

The bearing may be a roller bearing, a ball bearing, a slider bearing or similar comprising rolling or sliding elements between an inner and an outer ring.

Normally, the bearing 2 is a large bearing and may be applied as a pitch bearing in a wind turbine.

Pitch bearings of wind turbines are normally large, grease-lubricated rolling bearings and they connect each rotor blade with a rotor hub of the wind turbine. Pitch bearings are used to turn the rotor blades to control the power output and/or structural loads of the turbine. Common actuators turning the blades are hydraulic cylinders or electrical motor-gearbox combinations. A pitch bearing normally consists of two rings forming an outer and an inner raceway and a complement of either balls or rollers. The inner and outer rings have mounting holes in the side surface allowing the bearing to be bolted directly to the supporting structures which is either the blade or the hub.

Often wind turbines are placed at isolated location while being exposed to a wide range of weather conditions and as the pitch bearing is positioned atop the tower presence of technicians providing regular access and observation is limited. Usually, pitch bearings are directly observed every six to 12 months during periodic maintenance, making it difficult to detect problems early. Additionally, the hollow cast-iron hub and composite blade are quite flexible and provide the bearings little support. Use of continuous-feed lubrication systems enabling sites to add or adjust grease-fill as necessary, without requiring technicians to climb has proven to be a large advantage.

| **Ref. no.** | **Ref. name** |
|---|---|
| 1 | Lubrication unit |
| 2 | Bearing |
| 3 | Inner surface of bearing |
| 4 | Outer surface of bearing |
| 5 | Side surface of bearing |
| 6 | Container |
| 7 | Cover |
| 8 | Piston |
| 9 | Openings for lubricant in bearing |
| 10 | Outlet for lubricant from lubrication unit |
| 11 | Inlet for lubricant from external source |
| 12 | Inlet for lubricant to reservoir /Outlet for lubricant from reservoir |
| 13 | Means for connecting lubrication unit to bearing |
| 14 | Distribution chamber |
| 15 | Air supply line |
| 16 | Valve |
| 17 | Control unit for valve |

## Claims

1. Lubrication unit (1) for a bearing (2) comprising
- a container (6) comprising a reservoir for lubricant and comprising an inlet (12) and an outlet (12) for lubricant,
- a hose or tube or pipe (13) configured to fluidly connect the lubrication unit (1) to the bearing (2),
**characterized in that** the lubrication unit (1) comprises a distribution chamber (14) which distribution chamber (14) comprises an inlet (11) for lubricant from an external source, an outlet (12) for lubricant to the container (6), an inlet (12) for lubricant from the container (6), and an outlet (10) for lubricant to the bearing (2).

2. A lubrication unit (1) according to claim 1, wherein the lubrication unit (1) is secured to a surface of the bearing (2) during operation.

3. A lubrication unit (1) according to any previous claim, wherein the lubrication unit (1) is fluidly connected to the bearing by a rigid connection.

4. A lubrication unit (1) according to claim 2, wherein an end of the pipe (13) configured to be fixed to the bearing (2) comprises an outer thread adapted to fit a corresponding inner thread of an opening (9) in a bearing (2).

5. A lubrication unit (1) according to any previous claim, wherein the distance between the container (6) of the lubrication unit (1) and surface of the bearing (2) to which it is mounted is less than 1 m, or less than 0,5 m, or less than 0,4 m or less than 0,2 m.

6. A lubrication unit (1) according to any previous claim, wherein the lubrication unit (1) comprises controlling means (8, 17) controlling the amount of lubricant supplied to the bearing (2).

7. A lubrication unit (1) according to claim 6, wherein the controlling means comprises a pump (8) and a valve (16).

8. A lubrication unit (1) according to claim 7, wherein opening and closing of the valve (16) is controlled by air supplied via an air supply line (15).

9. A lubrication system comprising a lubrication unit (1) according to any of the claims 1-8, which lubrication system further comprises a bearing (2).

10. A lubrication system according to claim 9, wherein the system comprises at least two lubrication units (1), or at least three lubrication units (1), or at least four lubrication units (1), or at least five lubrication units (1), or at least six lubrication units (1).

11. A lubrication system according to claim 9 or 10, wherein the bearing (2) is a roller bearing, a ball bearing, a slider bearing or the like.

12. A lubrication system according to any of the claims 9-11, wherein the bearing (2) is a large bearing having an inner diameter of at least 1 m, or of at least 2 m, and/or of maximum 10 m.

13. A lubrication system according to any of the claims 9-12, wherein the bearing is applied as a pitch bearing in a wind turbine.

14. A lubrication system according to any of the claims 9-13, wherein each opening (9) in the bearing (2) comprises fastening means adapted to fix a pipe (13) of the lubrication unit (1) to the bearing (2).
